# EUROPÄISCHE PATENTSCHRIFT

(11) **EP 1 792 474 B1**
(45) Veröffentlichungstag und Bekanntmachung des Hinweises auf die Patenterteilung: **13.07.2011**
(21) Anmeldenummer: 05775975.5
(22) Anmeldetag: 18.08.2005
(51) Int. Cl.: H04M 3/533

(54) **VERFAHREN FÜR EINE AUSGABE-BEHANDLUNG VON IN POSTFÄCHERN EINES NACHRICHTENSPEICHERSYSTEMS GESPEICHERTEN NACHRICHTEN**
METHOD FOR PROCESSING THE OUTPUT OF MESSAGES THAT ARE STORED IN THE MAILBOXES OF A MESSAGE STORAGE SYSTEM
PROCEDE POUR REALISER LE TRAITEMENT D'EMISSION DE MESSAGES ENREGISTRES DANS DES BOITES POSTALES D'UN SYSTEME DE MEMOIRE DE MESSAGES

(30) Priorität: 24.09.2004 DE 102004046402
(43) Veröffentlichungstag der Anmeldung: 06.06.2007
(73) Patentinhaber: Siemens Enterprise Communications GmbH & Co. KG, 81379 München (DE)
(72) Erfinder: LARISCH, Erhard, 81476 München (DE)
(74) Vertreter: Fritzsche, Thomas
(86) Internationale Anmeldenummer: PCT/EP2005/054072
(87) Internationale Veröffentlichungsnummer: WO 2006/032589

(56) Entgegenhaltungen:
- EP-A- 0 982 920
- WO-A-00/51327
- WO-A-01/47228

## Beschreibung

Die vorliegende Erfindung betrifft ein Verfahren für eine Ausgabe-Behandlung von in Postfächern eines Nachrichtenspeichersystems gespeicherten Nachrichten, bei dem eine erste Verbindung zwischen einem Endgerät eines Postfachinhabers und dem Nachrichtenspeichersystem eingerichtet wird, und wobei bei einer von einem Teilnehmer für den Postfachinhaber hinterlegten Nachricht von dem Postfachinhaber ein zweite Verbindung zu einem Endgerät des Teilnehmers einrichtbar ist.

Aus der "Produktschrift "HICOM 300 `Voice Mail Service VMS'": Siemens AG, 1995, Bestell-Nr.: A31002-S10-A1-7-5," ist ein Sprachspeichersystem 'Voice Mail Service VMS' bekannt, welches in ein privates ISDN-Vermittlungssystem integriert ist. Dieses Sprachspeichersystem dient zum Speichern, Abrufen und Verteilen von Nachrichten in natürlicher Sprache. Den im Sprachspeichersystem eingetragenen Benutzern ist hierfür ein persönliches Postfach ("Sprachbriefkasten") zugeteilt. Postfachinhaber können bei ihrer Abwesenheit die für sie bestimmten Anrufe zu Ihrem Postfach umleiten, in dem die mit den Anrufen übermittelten Nachrichten gespeichert werden.

Durch Anwählen seines Postfaches kann der eingetragene Benutzer jederzeit und ortsunabhängig die gespeicherten Nachrichten abhören. Eine akustische Bedienerführung erleichtert den Umgang mit dem Sprachspeichersystem. Die Bedienung des Sprachspeichersystems erfolgt z.B. mit Hilfe von über den Tastwahlblock eines Endgeräts aktivierbaren Frequenztönen nach dem Mehrfrequenzwahlverfahren (MFV).

Nach dem Anhören einer gespeicherten Nachricht kann die Nachricht gelöscht, gespeichert oder weiter bearbeitet werden. So kann z.B. eine Frage eines Teilnehmers, der eine Sprach-Nachricht hinterlegt hat, direkt in dessen Postfach beantwortet werden. Nach Abhören einer Nachricht kann auch direkt eine Kommunikationsverbindung zu diesem Teilnehmer hergestellt werden, ohne dessen Rufnummer eingeben zu müssen (Rückfrage).

Durch eine vermehrte Nutzung von Sprachspeichersystemen ('Voice Mail') nimmt die Anzahl von kurzfristig (z.B. während einer Besprechung) oder mittelfristig (z.B. während einer mehrtägigen Abwesenheit) zu speichernden Nachrichten zu. Es ist daher für den Postfachinhaber von Interesse die Gesamtheit der gespeicherten Sprach-Nachrichten so zügig und einfach wie möglich abzuarbeiten.

Bei einer erfolglosen Rückfrage, d.h. bei Nichtzustandekommen einer Verbindung zwischen dem Postfachinhaber und einem Teilnehmer, der eine Sprach-Nachricht hinterlegt hat, erlauben es viele Sprachspeichersysteme eine Sprach-Nachricht zu hinterlegen und/oder anschließend unterbrechungsfrei mit der Bearbeitung einer nächsten bzw. anderen Sprach-Nachricht im Sinne einer logischen `Voice Mail User Session' fortzufahren. Ist dagegen ein Verbindungsversuch zu einem Teilnehmer, der eine Sprach-Nachricht hinterlegt hat erfolgreich, d.h. es ist zu einer gewünschten Zweierverbindung zwischen dem Postfachinhaber und dem Teilnehmer, ohne weitere Beteiligung des Sprachspeichersystems gekommen, so ist mit dem Beenden dieser Zweierverbindung stets auch die Verbindung zum Sprachspeichersystem beendet.

Nach einer erfolgreichen Verbindung zwischen dem Postfachinhaber und dem Teilnehmer, der eine Sprach-Nachricht hinterlegt hat, muss der Postfachinhaber zur Fortsetzung seiner Nachrichtenabarbeitung erneut eine Verbindung zum Sprachspeichersystem aufbauen, um seine 'Voice Mail User Session' mit der nächsten, bzw. einer anderen gespeicherten Nachricht, oder auch mit dem Löschen der soeben erfolgreich bearbeiteten Nachricht fortzusetzen. Das bedeutet, dass im Zuge des erneuten Verbindungsaufbaus auch wieder eine Eingabe aller notwendigen Identifikationsdaten und falls erforderlich von Paßwörtern vorgenommen werden muss.

Aus der deutschen Patentschrift DE 197 20 597 C2 ist ein Verfahren bekannt, mit dem die erneute Eingabe der notwendigen Identifikationsdaten und falls erforderlich von Passwörtern nicht mehr notwendig ist. Hierfür wird vor dem Ersetzen einer ersten Verbindung zwischen dem Postfachinhaber und dem Nachrichtenspeichersystem eine zweite Verbindung zwischen einer dem Postfachinhabers zugeordneten Telekommunikationsanlage und dem Nachrichtenspeichersystem aufgebaut, wobei in der Telekommunikationsanlage die Rufnummer des Endgerätes des Postfachinhabers und die des Nachrichtenspeichersystems gespeichert werden. Bei einer durch den Teilnehmer veranlassten Beendigung der Verbindung zwischen dem Postfachinhaber und dem Teilnehmer wird nachfolgend anhand der in der Telekommunikationsanlage gespeicherten Rufnummern erneut eine erste Verbindung zwischen dem Postfachinhaber und dem Nachrichtenspeichersystem aufgebaut.

Das Dokument WO0147228 offenbart den Oberbegriff der unabhängigen Ansprüche 1 und 9.

Hierfür ist jedoch zwischen der Telekommunikationsanlage und dem Nachrichtenspeichersystem eine zusätzliche Schnittstelle - beispielsweise eine CTI-Schittstelle - notwendig, was mit einem höheren technischen Aufwand verbunden ist.

Der Erfindung liegt somit die Aufgabe zugrunde, ein Verfahren und ein Nachrichtenspeichersystem anzugeben, durch welche der technische Aufwand bei einer 'Voice Mail User Session' unter Beibehaltung des gewohnten Komforts reduziert werden kann.

Eine Lösung der Aufgabe erfolgt bezüglich des Verfahrens ausgehend vom Oberbegriff des unabhängigen Patentanspruchs 1 durch dessen kennzeichnende Merkmale und bezüglich des Nachrichtenspeichersystems durch die Merkmale des unabhängigen Patentanspruchs 9.

Das erfindungsgemäße Verfahren basiert auf einem System, bei dem eine erste Verbindung zwischen dem Endgerät des Postfachinhabers und dem Nachrichtenspeichersystem eingerichtet wird, und bei dem bei einer von einem Teilnehmer für den Postfachinhaber hinterlegten Nachricht von dem Endgerät des Postfachinhabers ein zweite Verbindung zu einem Endgerät des Teilnehmers einrichtbar ist.

Erfindungsgemäß wird die zweite Verbindung dabei durch den Aufbau einer Dreierkonferenz-Verbindung zwischen dem Nachrichtenspeichersystem, dem Endgerät des Postfachinhabers und dem Endgerät des Teilnehmers eingerichtet.

Ein wesentlicher Vorteil der Erfindung besteht darin, dass das erfindungsgemäße Verfahren auf einfache Weise in bereits bestehende Systeme implementiert werden kann.

Aufgrund der Tatsache, dass die erste Verbindung auch während der Dauer der zweiten Verbindung durch die Nutzung einer Dreierkonferenz-Verbindung weiter fortbesteht und damit die Informationen über die erste Verbindung während der aktiven zweiten Verbindung im Nachrichtenspeichersystem weiterhin hinterlegt sind, sind keine Erweiterungen (zusätzliche Schnittstelle) in einer dem Postfachinhaber zugeordneten Telekommunikationsanlage oder dem Nachrichtenspeichersystem notwendig.

Vorteilhafte Weiterbildungen der Erfindung sind in den Unteransprüchen angegeben.

Gemäß einer Ausgestaltung der vorliegenden Erfindung werden während der Dreierkonferenz-Verbindung die Nutzdatenkanäle - in der Literatur häufig als "Media Kanäle" bezeichnet - der ersten Verbindung deaktiviert. Die erste Verbindung ist während der - durch die Dreierkonferenz-Verbindung realisierten - zweiten Verbindung somit bezüglich der "Media Kanäle" stummgeschaltet", in der Literatur häufig als "Mude" bezeichnet.

Durch die Deaktivierung der Nutzdatenkanäle der ersten Verbindung wird während der Dreierkonferenz-Verbindung für die erste Verbindung somit nur eine sehr geringe Bandbreite benötigt.

Gemäß einer weiteren Ausgestaltung der vorliegenden Erfindung wird in Fällen, in denen der Postfachinhaber die Dreierkonferenz-Verbindung beendet, die erste Verbindung ebenfalls automatisch beendet. In Fällen, in denen der Teilnehmer die Dreierkonferenz-Verbindung beendet, bleibt die erste Verbindung bestehen und die Nutzdatenkanäle der ersten Verbindung werden wieder automatisch aktiviert. Auf diese Weise kann die Bearbeitung der im Nachrichtenspeichersystem gespeicherten Nachrichten an der Stelle fortgesetzt werden, an der die Bearbeitung durch den Aufbau der Dreierkonferenz-Verbindung unterbrochen wurde.

Ein Ausführungsbeispiel der Erfindung wird im Folgenden anhand der Zeichnung näher erläutert.

Dabei zeigt:
- Fig. 1:: ein Strukturbild zur schematischen Darstellung der im Rahmen einer Durchführung einer 'Voice Mail User Session' beteiligten Funktionseinheiten; und
- Fig. 2:: ein Ablaufdiagramm zur Veranschaulichung der bei einer Weiterbildung des erfindungsgemäßen Verfah- rens ablaufenden wesentlichen Verfahrensschritte.

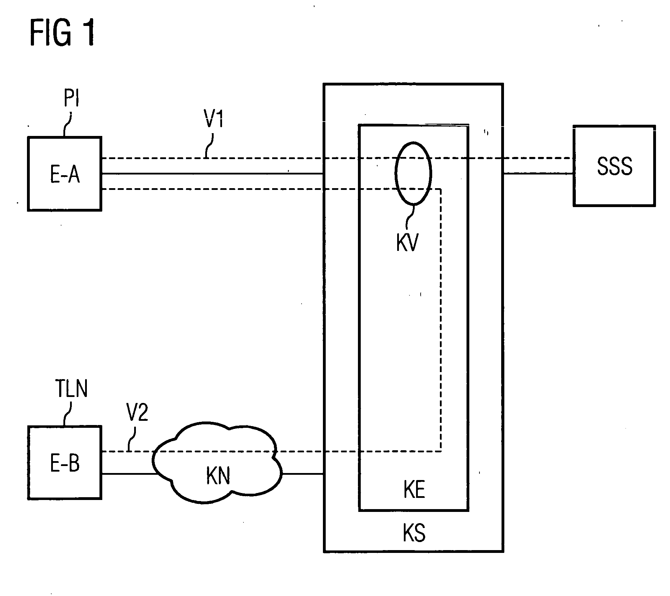

In Fig. 1 ist in schematischer Weise eine zentrale Kommunikationseinrichtung KS - beispielsweise eine Kommunikationsanlage oder ein Kommunikationsserver - dargestellt, an welche ein Nachrichtenspeichersystem SSS angeschlossen ist. Des Weiteren ist an die zentrale Kommunikationseinrichtung KS ein erstes Endgerät E-A eines Postfachinhaber PI und über ein Kommunikationsnetz KN ein zweites Endgerät E-B angeschlossen. Das Sprachspeichersystem SSS, das erste und das zweite Endgerät E-A, E-B sind beispielsweise über ISDN- oder paket-orientierte Schnittstellen mit der zentralen Kommunikationseinrichtung KS verbunden. Die Einrichtungen können jedoch auch über beliebige andere Schnittstellen miteinander verbunden sein.

Das zweite Endgerät E-B ist einem Teilnehmer TLN zugeordnet, wobei durch den Teilnehmer TLN für den Postfachinhaber PI eine - nicht dargestellte - Nachricht im Nachrichtenspeichersystem SSS hinterlegt ist. Bei den im Nachrichtenspeichersystem SSS speicherbaren Nachrichten kann es sich beispielsweise um Sprach-Nachrichten, Fax-Nachrichten, Nachrichten für elektronische Post, SMS-Nachrichten (Short Message Service), MMS-Nachichten (Mulitmedia Message Service) oder um audiovisuelle Nachrichten handeln. Zur Abfrage der gespeicherten Nachricht ist zwischen dem ersten Endgerät E-A und dem Nachrichtenspeichersystem SSS eine erste Verbindung V1 eingerichtet.

Der Postfachinhaber PI kann nach dem Aufbau der ersten Verbindung V1 mit der Abarbeitung, d.h. mit dem Ausgabevorgang der im Nachrichtenspeichersystem SSS gespeicherten Nachrichten beginnen. Im Zuge des Ausgabevorgangs kann ein Verbindungsaufbau vom ersten Endgerät E-A des Postfachinhabers PI zum zweiten Endgerät E-B des Teilnehmers TLN in Auftrag gegeben werden (Rückfrage). Der Aufbau einer derartigen zweiten Verbindung V2 zwischen dem ersten Endgerät E-A und dem zweiten Endgerät E-B wird erfindungsgemäß über eine in der zentralen Kommunikationseinrichtung KS implementierte Konferenzeinheit KE realisiert. Alternativ kann die Konferenzeinheit KE durch eine eigenständige Einrichtung realisiert sein, die der zentralen Kommunikationseinrichtung KS zugeordnet ist. Der Aufbau der zweiten Verbindung V2 wird hierbei durch das Einrichten einer Dreierkonferenz-Verbindung KV zwischen dem Nachrichtenspeichersystem SSS, dem ersten Endgerät E-A und dem zweiten Endgerät E-B realisiert. Die Dreierkonferenz-Verbindung KV setzt sich dabei logisch aus der zwischen dem ersten Endgerät E-A und dem Nachrichtenspeichersystem SSS bestehenden ersten Verbindung V1 und der zwischen dem ersten und dem zweiten Endgerät E-A; E-B bestehenden zweiten Verbindung V2 zusammen.

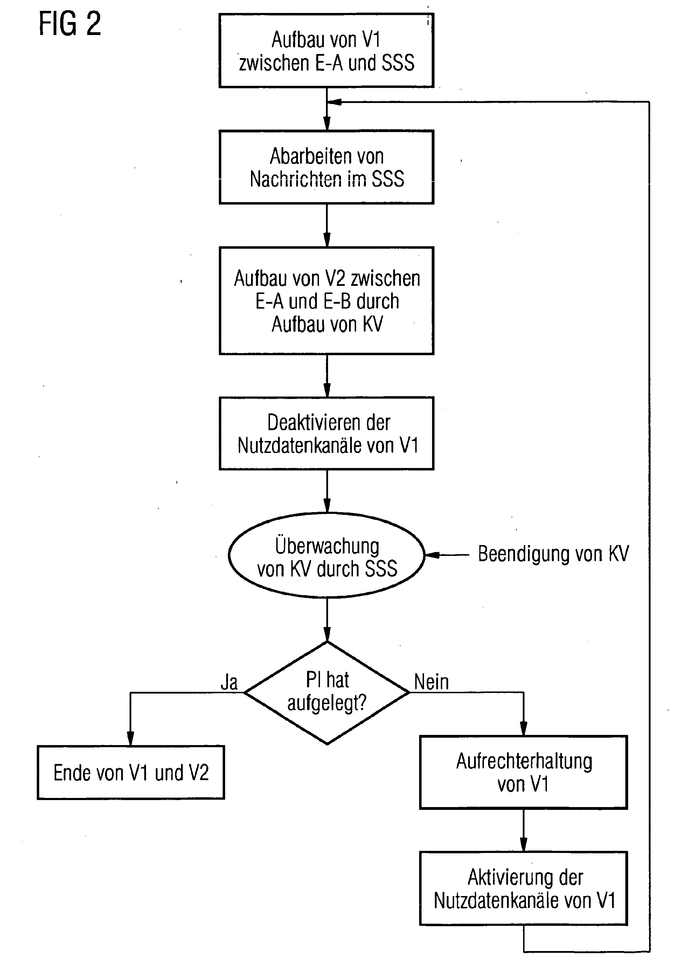

In Fig. 2 ist ein Ablaufdiagramm mit den wesentlichen Schrit - ten zur Abarbeitung der im Nachrichtenspeichersystem SSS gespeicherten Nachrichten dargestellt, wobei zur bessern Verständlichkeit weiterhin auf die Fig. 1 Bezug genommen wird. Für die Abarbeitung der im Nachrichtenspeichersystem SSS gespeicherten Nachrichten wird in einem ersten Schritt über die zentrale Kommunikationseinrichtung KS eine erste Verbindung V1 zwischen dem ersten Endgerät E-A des Postfachinhabers PI und dem Nachrichtenspeichersystem SSS aufgebaut.

Der Postfachinhaber PI kann daraufhin mit der Abarbeitung, d.h. mit dem Ausgabevorgang der im Nachrichtenspeichersystem SSS gespeicherten Nachrichten beginnen. In der Literatur wird in diesem Zusammenhang von einer so genannten 'Voice Mail User Session' gesprochen. Im Zuge des Ausgabevorgangs kann eine zweite Verbindung V2 vom ersten Endgerät E-A des Postfachinhabers PI zum zweiten Endgerät E-B des Teilnehmers TLN initiiert werden (Rückfrage). Der Aufbau der zweiten Verbindung V2 wird hierbei durch das Einrichten einer Dreierkonferenz-Verbindung KV zwischen dem Nachrichtenspeichersystem SSS, dem ersten Endgerät E-A und dem zweiten Endgerät E-B realisiert.

Während der Dreierkonferenz-Verbindung KV werden die Nutzdatenkanäle - in der Literatur häufig als "Media Kanäle" bezeichnet - der ersten Verbindung V1 deaktiviert. Die erste Verbindung V1 ist während der - durch die Dreierkonferenz-Verbindung KV realisierten - zweiten Verbindung V2 somit bezüglich der "Media Kanäle" stummgeschaltet", in der Literatur häufig als "Mude" bezeichnet. Durch die Deaktivierung der Nutzdatenkanäle der ersten Verbindung V1 wird somit während der Dreierkonferenz-Verbindung KV für die erste Verbindung V1 nur eine sehr geringe Bandbreite benötigt.

Während der Dauer der Dreierkonferenz-Verbindung KV überwacht das Nachrichtenspeichersystem SSS die Dreierkonferenz-Verbindung KV permanent dahingehend, ob die Dreierkonferenz-Verbindung KV bzw. die zweite Verbindung V2 durch einen der Kommunikationspartner, beispielsweise durch Auflegen eines Telefonhörers, beendet wird. Hierbei wird dahingehend unterschieden, ob der Teilnehmer TLN oder der Postfachinhaber PI die Dreierkonferenz-Verbindung KV bzw. die zweite Verbindung V2 beendet.

In Fällen, in denen der Postfachinhaber PI die Dreierkonferenz-Verbindung KV bzw. die zweite Verbindung V2 beendet, wird automatisch auch die erste Verbindung zwischen dem ersten Endgerät E-A und dem Nachrichtenspeichersystem SSS beendet. Die 'Voice Mail User Session' wird somit komplett beendet.

In Fällen, in denen der Teilnehmer TLN die Dreierkonferenz-Verbindung KV bzw. die zweite Verbindung V2 beendet, bleibt die erste Verbindung V1 bestehen und die Nutzdatenkanäle der ersten Verbindung V1 werden automatisch wieder aktiviert. Auf diese Weise kann die Bearbeitung der im Nachrichtenspeichersystem SSS gespeicherten Nachrichten an der Stelle fortgesetzt werden, an der die Bearbeitung durch den Aufbau der Dreierkonferenz-Verbindung KV unterbrochen wurde.

Aufgrund der Tatsache, dass die erste Verbindung V1 auch während der Dauer der zweiten Verbindung V2 durch die Nutzung einer Dreierkonferenz-Verbindung KV weiter fortbesteht und damit die Informationen über die erste Verbindung V1 während der aktiven zweiten Verbindung V2 im Nachrichtenspeichersystem SSS hinterlegt sind, sind keine Erweiterung (zusätzliche Schnittstelle) in der zentralen Kommunikationseinrichtung KS oder dem Nachrichtenspeichersystem SSS notwendig.

## Patentansprüche

1. Verfahren für eine Ausgabe-Behandlung von in Postfächern eines Nachrichtenspeichersystems (SSS) gespeicherten Nachrichten,
bei dem eine erste Verbindung (V1) zwischen einem Endgerät (E-A) eines Postfachinhabers (PI) und dem Nachrichtenspeichersystem (SSS) eingerichtet wird, und
bei dem bei einer von einem Teilnehmer (TLN) für den Postfachinhaber (PI) hinterlegten Nachricht von dem Endgerät (E-A) des Postfachinhabers (PI) ein zweite Verbindung (V2) zu einem Endgerät (E-B) des Teilnehmers (TLN) einrichtbar ist,
**dadurch gekennzeichnet,**
**dass** die zweite Verbindung (V2) durch einen Aufbau einer Dreierkonferenz-Verbindung (KV) zwischen dem Nachrichtenspeichersystem (SSS), dem Endgerät (E-A) des Postfachinhabers (PI) und dem Endgerät (E-B) des Teilnehmers (TLN) eingerichtet wird.

2. Verfahren nach Anspruch 1,
**dadurch gekennzeichnet,**
**dass** während der Dreierkonferenz-Verbindung (KV) Nutzdatenkanäle der ersten Verbindung (V1) deaktiviert werden.

3. Verfahren nach Anspruch 1 oder 2,
**dadurch gekennzeichnet,**
**dass** das Nachrichtenspeichersystem (SSS) die Dreierkonferenz-Verbindung (KV) permanent dahingehend überwacht, ob der Teilnehmer (TLN) oder der Postfachinhaber (PI) die Dreierkonferenz-Verbindung (KV) beendet.

4. Verfahren nach Anspruch 3,
**dadurch gekennzeichnet,**
**dass** in Fällen, in denen der Postfachinhaber (PI) die Dreierkonferenz-Verbindung (KV) beendet, automatisch auch die erste Verbindung (V1) beendet wird.

5. Verfahren nach Anspruch 3,
**dadurch gekennzeichnet,**
**dass** in Fällen, in denen der Teilnehmer (TLN) die Dreierkonferenz-Verbindung (KV) beendet, die erste Verbindung (V1) bestehen bleibt und automatisch die Nutzdatenkanäle der ersten Verbindung (V1) wieder aktiviert werden.

6. Verfahren nach Anspruch 5,
**dadurch gekennzeichnet,**
**dass** die Aktivierung der Nutzdatenkanäle durch das Nachrichtenspeichersystem (SSS) oder durch das Endgerät (E-A) des Postfachinhabers (PI) oder durch eine dem Endgerät (E-A) des Postfachinhabers (PI) zugeordnete zentrale Kommunikationseinrichtung (KS) erfolgt.

7. Verfahren nach Anspruch 5 oder 6,
**dadurch gekennzeichnet,**
**dass** nach einer erfolgten Aktivierung der Nutzdatenkanäle eine Bearbeitung der im Nachrichtenspeichersystem (SSS) gespeicherten Nachrichten an der Stelle fortgesetzt wird, an der die Bearbeitung durch den Aufbau der Dreierkonferenz-Verbindung (KV) unterbrochen wurde.

8. Verfahren nach einem der vorangegangenen Ansprüche,
**dadurch gekennzeichnet,**
**dass** in dem Nachrichtenspeichersystem (SSS) Sprach-Nachrichten und/oder Fax-Nachrichten und/oder Nachrichten für elektronische Post und/oder SMS-Nachrichten und/oder MMS-Nachrichten und/oder audiovisuelle Nachrichten speicherbar sind.

9. Nachrichtenspeichersystem (sss) mit Mitteln zur Durchführung eines der Verfahren nach einem der vorhergehenden Ansprüche 1 - 8.

## Claims

1. A method for an output treatment of messages stored in mailboxes of a message storage system (SSS), in which a first connection (V1) is opened between a terminal (E-A) of a mailbox owner (PI) and the message storage system (SSS), and in which, if a subscriber (TLN) has left a message for the mailbox owner (PI), a second connection (V2) to a terminal (E-B) of the subscriber (TLN) can be opened from the terminal (E-A) of the mailbox owner (PI),
**characterised in that**
the second connection (V2) is opened by establishing a three-party conference connection (KV) between the message storage system (SSS), the terminal (E-A) of the mailbox owner (PI) and the terminal (E-B) of the subscriber (TLN).

2. Method according to Claim 1,
**characterised in that**
user data channels of the first connection (V1) are deactivated during the three-party conference connection (KV).

3. A method according to Claim 1 or 2,
**characterised in that**
the message storage system (SSS) permanently monitors the three-party conference connection (KV) as to whether the subscriber (TLN) or the mailbox owner (PI) closes the three-party conference connection (KV).

4. A method according to Claim 3,
**characterised in that**
in cases in which the mailbox owner (PI) closes the three-party conference connection (KV), the first connection (V1) is also automatically closed.

5. A method according to Claim 3,
**characterised in that** in cases in which the subscriber (TLN) closes the three-party conference connection (KV), the first connection (V1) remains open and the user data channels of the first connection (V1) are automatically reactivated.

6. A method according to Claim 5, **characterised in that** the activation of the user data channels is effected by the message storage system (SSS) or by the terminal (E-A) of the mailbox owner (PI) or by a central communication device (KS) assigned to the terminal (E-A) of the mailbox owner (PI).

7. A method according to Claim 5 or 6,
**characterised in that**
after an effected activation of the user data channels, a processing of the messages stored in the message storage system (SSS) is resumed at the point where the processing was interrupted by the establishment of the three-party conference connection (KV).

8. A method according to any one of the preceding claims,
**characterised in that**
voice messages and/or fax messages and/or messages for electronic mail and/or SMS messages and/or MMS messages and/or audiovisual messages can be stored in the message storage system (SSS).

9. A message storage system (SSS) having means for performing one of the methods according to any one of the preceding Claims 1-8.

## Revendications

1. Procédé pour réaliser un traitement d'émission de messages enregistrés dans des boîtes postales d'un système de mémoire de messages (SSS),
dans lequel une première liaison (V1) est mise en place entre un terminal (E-A) d'un détenteur de boîte postale (PI) et le système de mémoire de messages (SSS), et
dans lequel, si un usager (TLN) dépose un message pour le détenteur de boîte postale (PI), une deuxième liaison (V2) à un terminal (E-B) de l'usager (TLN) peut être mise en place par le terminal (E-A) du détenteur de boîte postale (PI),
**caractérisé en ce**
**que** la deuxième liaison (V2) est mise en place par un établissement d'une liaison de conférence à trois (KV) entre le système de mémoire de messages (SSS), le terminal (E-A) du détenteur de boîte postale (PI) et le terminal (E-B) de l'usager (TLN).

2. Procédé selon la revendication 1,
**caractérisé en ce**
**que** des canaux de données utiles de la première liaison (V1) sont désactivés durant la liaison de conférence à trois (KV).

3. Procédé selon la revendication 1 ou 2,
**caractérisé en ce**
**que**, de cette façon, le système de mémoire de messages (SSS) surveille en permanence la liaison de conférence à trois (KV) pour savoir si l'usager (TLN) ou le détenteur de boîte postale (PI) met fin à la liaison de conférence à trois (KV).

4. Procédé selon la revendication 3,
**caractérisé en ce**
**que**, dans les cas dans lesquels le détenteur de boîte postale (PI) met fin à la liaison de conférence à trois (KV), la première liaison (V1) est également terminée automatiquement.

5. Procédé selon la revendication 3,
**caractérisé en ce**
**que**, dans les cas dans lesquels l'usager (TLN) met fin à la liaison de conférence à trois (KV), la première liaison (V1) reste établie et les canaux de données utiles de la première liaison (V1) sont de nouveau activés automatiquement.

6. Procédé selon la revendication 5,
**caractérisé en ce**
**que**, l'activation des canaux de données utiles a lieu par le biais du système de mémoire de messages (SSS) ou par le biais du terminal (E-A) du détenteur de boîte postale (PI) ou par le biais d'un dispositif de communication central (KS) associé au terminal (E-A) du détenteur de boîte postale (PI).

7. Procédé selon la revendication 5 ou 6,
**caractérisé en ce**
**que**, après une activation réussie des canaux de données utiles, un traitement du message enregistré dans le système de mémoire de messages (SSS) est poursuivi à l'endroit auquel le traitement avait été interrompu par l'établissement de la liaison de conférence à trois (KV).

8. Procédé selon l'une quelconque des revendications précédentes,
**caractérisé en ce**
**que** des messages vocaux et/ou des messages de télécopie et/ou des messages pour courrier électronique et/ou des messages SMS et/ou des messages MMS et/ou des messages audiovisuels peuvent être enregistrés dans le système de mémoire de messages (SSS).

9. Système de mémoire de messages (SSS) dotés de moyens permettant d'effectuer un des procédés selon l'une quelconque des revendications précédentes 1 à 8.
